(19) Europäisches Patentamt
European Patent Office
Office européen des brevets

(11) **EP 1 521 209 B1**

(12) **EUROPEAN PATENT SPECIFICATION**

(45) Date of publication and mention
of the grant of the patent:
**28.02.2018 Bulletin 2018/09**

(51) Int Cl.:
***G06T 5/00*** *(2006.01)*

(21) Application number: **04104576.6**

(22) Date of filing: **21.09.2004**

(54) **Radiation image enhancement**

Verbesserung eines Strahlungsbildes

Amélioration d'une image obtenue par rayonnement

(84) Designated Contracting States:
**DE FR GB**

(30) Priority: **30.09.2003 JP 2003340417**

(43) Date of publication of application:
**06.04.2005 Bulletin 2005/14**

(73) Proprietor: **Konica Minolta Medical & Graphic, Inc.**
**Hino-shi,**
**Tokyo 191-8511 (JP)**

(72) Inventor: **KAJI, Daisuke**
**Tokyo 192-8505 (JP)**

(74) Representative: **Gille Hrabal**
**Brucknerstrasse 20**
**40593 Düsseldorf (DE)**

(56) References cited:
**WO-A2-00/36884**          **WO-A2-02/05206**
**JP-A- 2001 053 974**      **US-A- 5 471 987**

**Description**

**BACKGROUND OF THE INVENTION**

The present invention relates to an image processing method, an image processing apparatus and an image processing program all relating to processing of radiation images, and in particular, to an image processing method, an image processing apparatus and an image processing program all making it possible to obtain radiation images suitable for diagnoses.

In recent years, there has been developed an apparatus capable of obtaining directly radiation images as digital images. For example, in TOKKAISHO Nos. 55-12429 and 63-189853, there are disclosed many methods each employing a detector using a photostimulable fluorescent material as an apparatus for detecting an amount of radiation irradiated on a subject and thereby to obtain radiation images formed corresponding to the amount of the detection as electric signals.

In such an apparatus, radiations which have been transmitted through a subject once are irradiated on a detector in which a photostimulable fluorescent material is fixed on a sheet-shaped base board through coating or vacuum evaporation, so that the radiations may be absorbed in the photostimulable fluorescent material.

After that, radiation energy accumurated in the photostimulable fluorescent material through the absorption are radiated as fluorescence, by exciting the photostimulable fluorescent material with light or heat energy, then, the fluorescence is converted photoelectrically to obtain image signals.

On the other hand, there is proposed a radiation image detecting apparatus obtained by generating electric charges corresponding to intensity of radiated radiation, then, accumulating the generated electric charges on plural capacitors arranged in a two-dimensional way, and thereby, by taking out the accumulated electric charges.

In the radiation image detecting apparatus of this kind, those called flat panel detectors (FPD) are used. With respect to the FPD of this kind, there is known one that is realized by combination of a phosphor that emits fluorescence corresponding to intensity of radiated radiation and a photoelectric conversion element such as a photodiode that receives fluorescence emitted from the phosphor directly or through a reduction optical system and conducts photoelectric conversion and CCD, as is described in TOKKAIHEI No. 9-90048.

Further, as is described in TOKKAIHEI No. 6-342098, there is also known one that converts irradiated radiation into electric charges directly.

In these radiation image detecting apparatuses of this kind, it is normal to conduct image processing such as gradation conversion processing and edge enhancement processing for the image obtained, so that the image may become the one suitable for diagnoses.

Incidentally, when displaying or outputting radiation images based on image data thus obtained, image processing is conducted so that radiation images may become to be observed easily without being affected by variation in exposing conditions.

Therefore, after obtaining cumulative histogram of image data within the desired area of a radiation image, a data level which makes the cumulative histogram to be a prescribed ratio is established to be a standard signal value to conduct image processing, which is described in the following Patent Document 1.

Further, the following Patent Document 2 describes that appropriate image processing is conducted by after establishing image processing conditions based on the state of distribution of a high signal value area and a low signal value area.

(Patent Document 1) TOKKAIHEI No. 6-61325 (Page 1. Fig. 1)
(Patent Document 2) TOKKAI No. 2000-157518 (Pages 1 - 5, Fig. 4(a) and 4(b))

It is also referred to the documents WO02/05206A2 and JP2001053974A.

Incidentally, in radiation images, a ratio of a high density area (area where an amount of transmitted radiation is large) to a low density area (area where an amount of transmitted radiation is small) varies greatly depending on the radiographed region of a subject. Further, density in a lung field varies greatly depending on the state of a patient, for example, the state of breathing.

Therefore, after obtaining cumulative histogram of image data within the desired area of a radiation image, when conducting image processing by establishing a data level which makes the cumulative histogram to be a prescribed ratio as a standard signal value (TOKKAIHEI No. 6-61325), there is a possibility to be unable to obtain radiation images which can be easily observed for diagnoses, depending on a ratio of a high density area to a low density area.

For example, in the case of conducting gradation processing so that the standard signal value may become a prescribed density, when the low density area is dominant, the image is totally of high density because the standard value is a low value, while, when the high density area is dominant, the image is totally of low density because the standard value is a high value.

However, in the case of a region such as rib, even in the case of radiographing an upper rib portion (including a lung field portion having many high density areas) and a lower rib portion (including an abdominal portion having less high density areas), a portion necessary for diagnoses includes a high density area and a low density area, and therefore, it is not preferable for diagnosing that the total density is one-sided to low density or high density.

Namely, in the past, there have been proposed various methods for determining a parameter of image processing, and in these methods, a parameter is determined in the way to be given single-mindedly as a signal value or a parameter determined based on a single value or a histogram of a specific area (an area of interest) in images, and when the area or the parameter obtained is inappropriate, there has been an occasion where inappropriate image processing is obtained.

## SUMMARY OF THE INVENTION

The invention has been achieved in view of the problems stated above, and its object is to realize an image processing method, an image processing apparatus and an image processing program all making it possible to prevent occurrence of circumstances where a failure in determining processing conditions for image forming makes it difficult to diagnose, and to conduct image processing under the appropriate condition or the condition close to the appropriate one, in any occasion.

Namely, the problems mentioned above are solved by the method of claim 1, the apparatus of claim 2 and the program of claim 3.

A feature amount of a radiation image is calculated, the calculated feature amount is evaluated by a feature amount evaluating function, a parameter of image processing is determined based on results of the evaluation of the evaluated feature amount, and image processing is carried out by the determined parameter.

Since the image processing is carried out by the parameter evaluated and determined based on the feature amount of each radiation image, therefore, appropriate image processing can be carried out by conducting weighting corresponding to importance based on a feature amount for each signal value, by calculating an amplification factor of the signal in the case of converting with LUT for gradation processing of each pixel, and by determining LUT with which the total sum of the value obtained by multiplying the amplification factor and weight together for all pixels becomes maximum, for example. The importance based on the feature amount in this case is an amount determined based on the centricity degree value measuring a distance from the image center as the feature amount and edge intensity in each pixel detected by using a differential filter, because an important point for diagnosis is positioned at the center of the image generally in many cases and it further has an edge component, for example. Further, as the amplification factor, a gradient of LUT and an amount corresponding to the gradient at each pixel value, for example, can be considered.

As a result, it is possible to prevent occurrence of circumstances where a failure in determining processing conditions for image processing makes it difficult to diagnose, and to conduct image processing under the appropriate condition or the condition close to the appropriate one, in any occasion.

## BRIEF DESCRIPTION OF THE DRAWINGS

Fig. 1 is a block diagram of functions showing the total structure of the first embodiment of the invention functionally.
Fig. 2 is a flow chart showing a flow of total processing of the first embodiment of the invention.
Figs. 3(a) and 3(b) represent an illustration showing how processing is carried out in an embodiment of the invention.
Figs. 4(a) and 4(b) represent an illustration showing how processing is carried out in an embodiment of the invention.
Figs. 5(a) and 5(b) represent an illustration showing how processing is carried out in an embodiment of the invention.
Figs. 6(a) and 6(b) represent an illustration showing how processing is carried out in an embodiment of the invention.
Fig. 7 is an illustration showing how processing is carried out in an embodiment of the invention.
Fig. 8 is an illustration showing how processing is carried out in an embodiment of the invention.

## DETAILED DESCRIPTION OF THE PREFERRED EMBODIMENT

Preferred embodiments of the invention will be explained as follows.

Item (1)

An image processing method of obtaining a suitable image for diagnosis using a radiation image having signals according to an irradiation amount of a radiation ray transmitting through a subject, the image processing method comprises: a feature amount calculating step of calculating a feature amount of the radiation image; a feature amount evaluating step of evaluating the feature amount calculated with a feature amount evaluating function in the feature amount calculating step; a parameter determining step of determining a parameter for an image processing based on a result evaluated in the feature amount evaluating step; and an image processing step of processing an image using the parameter determined in the parameter determining step.

Item (2)

The image processing method of Item (1), wherein the image processing in the image processing step is a gradation processing and the feature amount is evaluated by the feature amount evaluating function referring to the gradation processing condition in the gradation processing.

Item (3)

The image processing method of Item (1), wherein an output of the feature amount evaluating function results from a feature amount evaluation in the feature amount evaluating step and a state such that the output of the feature amount evaluation function is maximum or minimum determines the image processing parameter in the parameter determining step.

Item (4)

The image processing method of Item (3), wherein the feature amount of the radiation image obtained in the feature amount calculating step is based on at least one of a statistic value of a predefined region around each pixel, a difference of values of adjacent pixels or pixels positioned predefined number of pixels apart and an edge component extracted from of all or a part of the radiation image, and wherein the feature amount evaluating function is determined based on a variation of the feature amount when the radiation image is converted using a converting method parameterized by one or more variables.

Item (5)

The image processing method of Item (4), the statistic value is a maximum or a minimum value of a predefined region around each pixel.

Item (6)

The image processing method of Item (4), wherein the statistic value is a median of a predefined region around each pixel.

Item (7)

The image processing method of Item (4), wherein the statistic value is a mode of a predefined region around each pixel.

Item (8)

The image processing method of Item (4), wherein the statistic value is one of a variance or a standard deviation of a predefined region around each pixel.

Item (9)

The image processing method of Item (4), the edge component is extracted by a high frequency region extracting filter.

Item (10)

The image processing method of Item (9), the high frequency region extracting filter is a differentiation filter.

Item (11)

The image processing method of Item (9), the high frequency region extracting filter is a Laplacian filter.

Item (12)

The image processing method of Item (4), the edge component is extracted by a Laplacian pyramid method.

Item (13)

The image processing method of Item (4), the edge component is extracted by a wavelet analysis.

Item (14)

The image processing method of Item (4), wherein the feature amount is determined by a set of the feature amount of Item (5) - (13) and at least one of a value calculated by adding, multiplying and subtracting a constant to the feature amount of Item (5) - (13), wherein the feature amount evaluating function is determined based on a variation of the feature amount when the radiation image is converted using a converting method parameterized by one or more variables.

Item (15)

The image processing method of Item (14), wherein the feature amount determined by a set of the feature amount and at lest one of the value calculated by adding, multiplying and subtracting a constant to the feature amount is calculated by at least one of a difference, an average, a maximum, a minimum, a variance, and a standard deviation of the set of the feature amounts and the value determined by the converted the feature amount value is a derivative of at least one of a difference, an average, a maximum, a minimum, a variance, and a standard deviation of the set of the feature amounts.

Item (16)

The image processing method of Item (4), wherein the parameterized image converting method converts pixel values using a lookup table for providing the gradation processing.

Item (17)

The image processing method of Item (4), wherein the parameterized image converting method is a frequency emphasis processing.

Item (18)

The image processing method of Item (4), wherein the parameterized image converting method is an equalization processing.

Item (19)

An image processing apparatus for obtaining a suitable image for diagnosis using a radiation image having signals according to an irradiation amount of a radiation ray transmitting through a subject, the image processing appratus comprising: feature amount calculating means of calculating a feature amount of the radiation image; feature amount evaluating means of evaluating the feature amount calculated with a feature amount evaluating function in the feature amount calculating means; parameter determining means of determining a parameter for an image processing based on a result evaluated in the feature amount evaluating means; and image processing means of processing an image using the parameter determined in the parameter determining means.

Item (20)

The image processing apparatus of Item (19), wherein the image processing in the image processing means is a gradation processing and the feature amount is evaluated by the feature amount evaluating function referring to the gradation processing condition in the gradation processing.

Item (21)

The image processing apparatus of Item (19), wherein an output of the feature amount evaluating function results from a feature amount evaluation in the feature amount evaluating means and a state such that the output of the feature amount evaluation function is maximum or minimum determines the image processing parameter in the parameter determining means.

Item (22)

The image processing apparatus of Item (21), wherein the feature amount of the radiation image obtained in the feature amount calculating means is based on at least one of a statistic value of a predefined region around each pixel, a difference of values of adjacent pixels or pixels positioned predefined number of pixels apart and an edge component extracted from of all or a part of the radiation image, and wherein the feature amount evaluating function is determined based on a variation of the feature amount when the radiation image is converted using a converting method parameterized by one or more variables.

Item (23)

The image processing apparatus of Item (22), the statistic value is a maximum or a minimum value of a predefined region around each pixel.

Item (24)

The image processing apparatus of Item (22), wherein the statistic value is a median of a predefined region around each pixel.

Item (25)

The image processing apparatus of Item (22), wherein the statistic value is a mode of a predefined region around each pixel.

Item (26)

The image processing apparatus of Item (22), wherein the statistic value is one of a variance or a standard deviation of a predefined region around each pixel.

Item (27)

The image processing apparatus of Item (22), the edge component is extracted by a high frequency region extracting filter.

Item (28)

The image processing apparatus of Item (27), the high frequency region extracting filter is a differentiation filter.

Item (29)

The image processing apparatus of Item (27), the high frequency region extracting filter is a Laplacian filter.

Item (20)

The image processing apparatus of Item (22), the edge component is extracted by a Laplacian pyramid method.

Item (31)

The image processing apparatus of Item (22), the edge component is extracted by a wavelet analysis.

Item (32)

The image processing apparatus of Item (22), wherein the feature amount is determined by a set of the feature amount of Item (23) - (31) and at least one of a value calculated by adding, multiplying and subtracting a constant to the feature amount of Item (23) - (31), wherein the feature amount evaluating function is determined based on a variation of the feature amount when the radiation image is converted using a converting method parameterized by one or more variables.

Item (33)

The image processing apparatus of Item (32), wherein the feature amount determined by a set of the feature amount and at lest one of the value calculated by adding, multiplying and subtracting a constant to the feature amount is calculated by at least one of a difference, an average, a maximum, a minimum, a variance, and a standard deviation of the set of the feature amounts and the value determined by the converted the feature value is a derivative of at least one of a difference, an average, a maximum, a minimum, a variance, and a standard deviation of the set of the feature amounts.

Item (34)

The image processing apparatus of Item (22), wherein the parameterized image converting method converts pixel values using a lookup table for providing the gradation processing.

Item (35)

The image processing apparatus of Item (22), wherein the parameterized image converting method is a frequency emphasis processing.

Item (36)

The image processing apparatus of Item (22), wherein the parameterized image converting method is an equalization processing.

Item (37)

An image processing program to obtain a suitable image for diagnosis using a radiation image having signals according to an irradiation amount of a radiation ray transmitting through a subject, the image processing program comprising: a feature amount calculating routine for calculating a feature amount of the radiation image; a feature amount evaluating routine for evaluating the feature amount calculated with a feature amount evaluating function in the feature amount calculating routine; a parameter determining routine for determining a parameter for an image processing based on a result evaluated in the feature amount evaluating routine; and an image processing routine for processing an image using the parameter determined in the parameter determining routine.

Item (38)

The image processing program of Item (37), wherein the image processing in the image processing routine is a gradation processing and the feature amount is evaluated by the feature amount evaluating function referring to the gradation processing condition in the gradation processing.

Item (39)

The image processing program of Item (37), wherein an output of the feature amount evaluating function results from a feature amount evaluation in the feature amount evaluating routine and a state such that the output of the feature amount evaluation function is maximum or minimum determines the image processing parameter in the parameter determining routine.

Item (40)

The image processing program of Item (39), wherein the feature amount of the radiation image obtained in the feature amount calculating routine is based on at least one of a statistic value of a predefined region around each pixel, a difference of values of adjacent pixels or pixels positioned predefined number of pixels apart and an edge component extracted from of all or a part of the radiation image, and wherein the feature amount evaluating function is determined based on a variation of the feature amount when the radiation image is converted using a converting method parameterized by one or more variables.

Item (41)

The image processing program of Item (40), the statistic value is a maximum or a minimum value of a predefined region around each pixel.

Item (42)

The image processing program of Item (40), wherein the statistic value is a median of a predefined region around each pixel.

Item (43)

The image processing program of Item (40), wherein the statistic value is a mode of a predefined region around each pixel.

Item (44)

The image processing program of Item (40), wherein the statistic value is one of a variance or a standard deviation of a predefined region around each pixel.

Item (45)

The image processing program of Item (40), the edge component is extracted by a high frequency region extracting filter.

Item (46)

The image processing program of Item (45), the high frequency region extracting filter is a differentiation filter.

Item (47)

The image processing program of Item (45), the high frequency region extracting filter is a Laplacian filter. Item (48)

The image processing program of Item (40), the edge component is extracted by a Laplacian pyramid method.

Item (49)

The image processing program of Item (40), the edge component is extracted by a wavelet analysis.

Item (50)

The image processing method of Item (40), wherein the feature amount is determined by a set of the feature amount of Item 41 - 49 and at least one of a value calculated by adding, multiplying or subtracting a constant to the feature amount of Item 41 - 49, wherein the feature amount evaluating function is determined based on a variation of the feature amount when the radiation image is converted using a converting method parameterized by one or more variables.

Item (51)

The image processing program of Item (50), wherein the feature amount determined by a set of the feature amount and at lest one of the value calculated by adding, multiplying and subtracting a constant to the feature amount is calculated by at least one of a difference, an average, a maximum, a minimum, a variance, and a standard deviation of the set of the feature amounts and the value determined by the converted the feature value is a derivative of at least one of a difference, an average, a maximum, a minimum, a variance, and a standard deviation of the set of the feature amounts.

Item (52)

The image processing program of Item (40), wherein the parameterized image converting method converts pixel values using a lookup table for providing the gradation processing.

Item (53)

The image processing program of Item (40), wherein the parameterized image converting method is a frequency emphasis processing.

Item (54)

The image processing program of Item (40), wherein the parameterized image converting method is an equalization processing.

The preferred embodiment for conducting the working of the invention will be explained in detail as follows, referring to the drawings.

Preferred embodiments of an image processing method, an image processing apparatus and an image processing program each being in the best form for conducting the working of the invention will be explained.

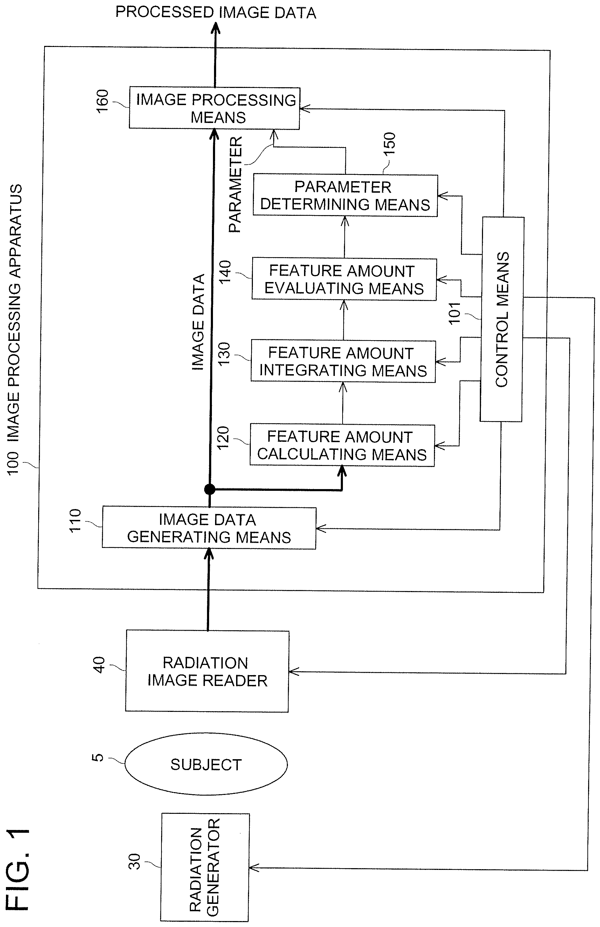

Incidentally, each means in the present embodiment can be composed of a hardware, a firmware or a software. Therefore, there is shown Fig. 1 representing a functional block diagram showing processing procedures including each step of the image processing method, each means of the image processing apparatus and each routine in the image processing program.

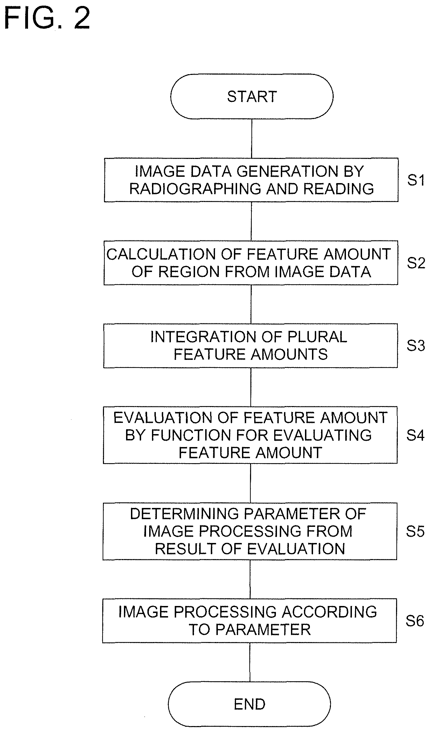

Structures and operations of the present embodiment will be explained in detail as follows, referring to the block diagram in Fig. 1, the flow chart in Fig. 2 and other illustrations. Incidentally, each means in Fig. 1 shows not only each means of the image forming apparatus but also each step of the image processing method and each routine of the image processing program.

(Entire structure and flow of processing)

1) Entire structure:

Radiation generator 30, radiation image reader 40 and image processing apparatus 100 are provided as shown in Fig. 1.

Inside the image processing apparatus 100, there are provided control means 101, image data generating means 110, feature amount calculating means 120, feature amount integrating means 130, feature amount evaluating means 140 and parameter determining means 150, as shown in Fig. 1.

2) Flow of processing:

- Control means 101 controls radiographing and reading of radiation images and various processing relating to determination of a parameter for image processing.
- Radiation emitted from radiation generator 30 is transmitted through subject 5, and the radiation transmitted through subject 5 is read by radiation image reader 40.
- Signals obtained through reading by radiation image reader 40 are converted into image data by image data generating means 110 (Fig. 2 S1).
- Feature amount calculating means 120 calculates a feature amount of radiation image data (Fig. 2 S2).
- Feature amount integrating means 130 integrates the feature amount of radiation image data (Fig. 2 S3).
- Feature amount evaluating means 140 evaluates the feature amount calculated or integrated with a feature amount evaluating function (Fig. 2 S4).
- Parameter determining means 150 determines a parameter (image processing condition) for image processing based on results of the evaluation of the evaluated feature amount (Fig. 2 S5).
- Image processing means 160 conducts image processing in accordance with the parameter determined by parameter determining means 150, concerning image data coming from image data generating means 110 (Fig. 2 S6).

(Detailed contents of each means and each step)

(1) Operation and control of each section:

In the control means 101, information such as radiographed regions or the radiographing direction is acquired first from a user interface. Acquisition of the information is carried out when a user specifies radiographed regions. For example, information is acquired by pressing a button on which a radiographed region is indicated on a user interface (not shown) of the image processing apparatus provided with a display section and a touch panel. In addition to the foregoing, acquisition of information is performed by utilizing a magnetic card, a bar code and HIS (Intra-hospital Information System: information control by network).

(2) Radiation image input:

Radiation generator 30 is controlled by control means 101, and radiation emitted from the radiation generator 30 is projected on an image pick-up panel mounted on the front surface of radiation image reader 40 through subject 5. In the radiation image reader 40, radiation transmitted through subject 5 is detected, and acquired as an image signal.
As a specific example of structure, those described in TOKKAIHEI No. 11-142998 and TOKKAI No. 2002-156716 represent one wherein a photostimulable fluorescent plate is used. Further, those employing a flat panel detector (FPD) as an input device include those described in TOKKAIHEI No. 6-342098 wherein detected X-rays are converted directly into electric charges and acquired as image signals, and those described in TOKKAIHEI No. 9-90048 wherein detected X-rays are converted once into light, and then, the light is received and converted into electric charges.
Incidentally, the radiation image reader 40 may be of the structure wherein a silver halide film on which a radiation image is recorded is irradiated with light emitted from a light source such as a laser or a fluorescent lamp, and transmitted light coming from the silver halide film is converted photoelectrically to generate image data. It is further possible to employ the structure wherein radiation energy is converted directly into an electric signal by the use of a radiation quantum digital detector to generate image data.
In the case of obtaining a radiation image of subject 5, radiation emitted from radiation generator 30 is irradiated on subject 5, and radiation transmitted through the subject 5 enters an image pick-up panel, under the assumption that the subject 5 is positioned between the radiation generator 30 and the image pick-up panel on radiation image reader 40.

(3) Establishment of region of interest:

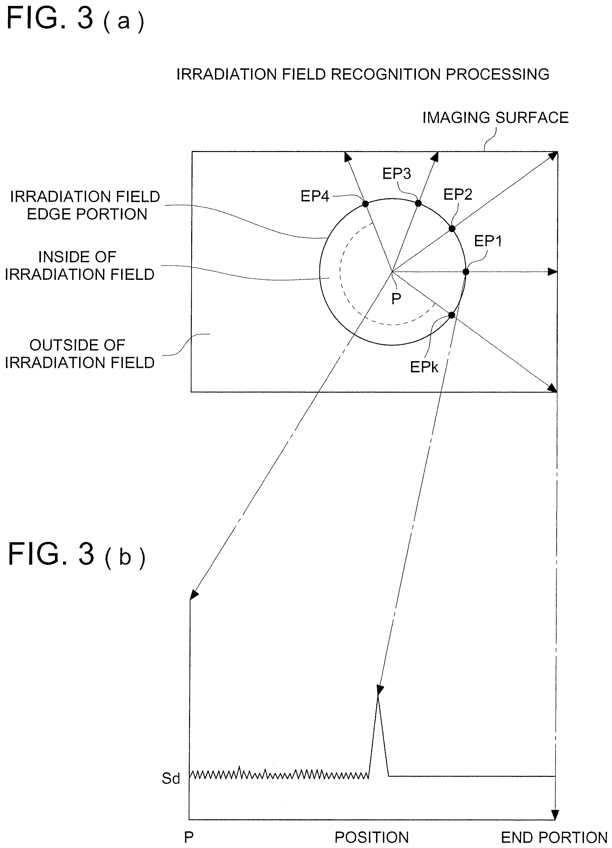

Incidentally, in the case of radiographing for radiation images, there is performed an irradiation field reduction wherein radiation non-transmission substance such as a lead plate is provided on a part of subject 5 or on the radiation generator 30 to restrict an irradiation field of radiation for the subject 5, in order to prevent that a portion which is not necessary for diagnoses is irradiated with radiation, or to prevent that a portion which is not necessary for diagnoses is irradiated with radiation and the radiation scattered in that place enters the portion that is necessary for diagnoses to lower the resolving power.
When this irradiation field reduction is performed, if level conversion processing and succeeding gradation processing are conducted by using image data of an area inside the irradiation field and of an area outside the irradiation field, image processing for a portion necessary for diagnoses inside the irradiation field cannot be conducted properly. In the image data generating means 110, therefore, irradiation field recognition for distinguishing between an area inside the irradiation field and an area outside the irradiation field.
In the irradiation field recognition, the method disclosed in TOKKAISHO No. 63-259538, for example, is used, and differential processing, for example, is conducted by using image data on a segment that connects prescribed position P on an imaging surface and an end portion side on the imaging surface as shown in Fig. 3(a). Differentiation signal Sd obtained by the differential processing has a signal level that is great at the irradiation field edge portion as shown in Fig. 3(b), and therefore, one irradiation field edge candidate point P1 is obtained by distinguishing the signal level of the differentiation signal Sd. By conducting the processing for obtaining the irradiation field edge candidate point in a radial manner with a prescribed position on the imaging surface serving as the center of the radiated processing, a plurality of irradiation field edge candidate points EP1 - Epk are obtained. By connecting adjoining edge candidate points of these plural irradiation field edge candidate points EP1 - Epk thus obtained by a straight line or a curved line, an irradiation field edge portion can be obtained.
Further, it is also possible to use the method disclosed in TOKKAIHEI No. 5-7579. In this method, when the image surface is divided into plural small areas, a dose of radiation becomes small substantially uniformly and a variance of image data becomes small on a small area on the outside of the irradiation field where irradiation of radiation is intercepted by the irradiation field reduction. In the small area on the inside of the irradiation field, the variance becomes high, compared with the outside of the irradiation field, because a dose of radiation is modulated by the subject. Furthermore, on the small area including an irradiation field edge portion, the variance becomes the highest, because a portion where the dose of radiation is the smallest and a portion of the dose of radiation modulated by the subject coexist. Owing to this, a small area including the irradiation field edge portion can be distinguished by the variance.

In addition, the method disclosed by TOKKAIHEI No. 7-181609 can also be used. In this method, image data are rotated on the prescribed rotation center, and the rotation is continued until the moment when the parallel condition detecting means detects that a boundary line of the irradiation field is in parallel with the axis of coordinates of the rectangular coordinates, and after the parallel condition is detected, the straight line equation of the boundary before the rotation is calculated by the straight line equation calculating means based on the rotation angle and the distance from the rotation center to the boundary line. After that, by determining the area surrounded by plural boundary lines from the straight line equation, an area of the irradiation field can be distinguished. When the irradiation field edge portion is a curved line, one boundary point, for example, is extracted by a boundary point extracting means based on image data, and a next boundary point is extracted from a group of boundary candidate points around the aforementioned boundary point. By extracting boundary points in succession from a group of boundary candidate points around the boundary point, it is possible to distinguish even when the irradiation field edge portion is a curved line.

After the recognition of the irradiation field, when converting the distribution of image data DT coming from the radiation image reader into the distribution of the desired level, an area (hereinafter referred to as "a region of interest") for determining the distribution of the level of image data DT from the radiation image reader is established.

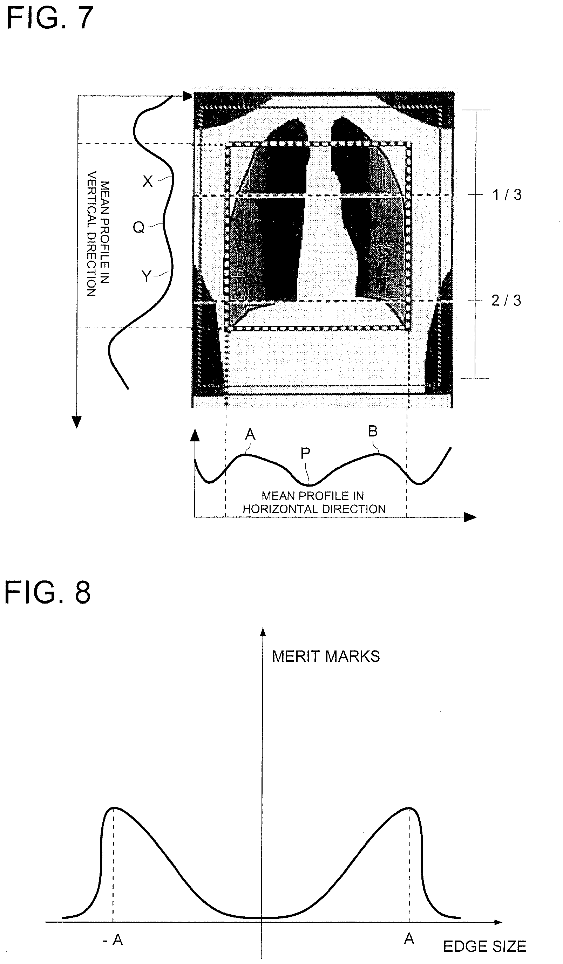

With respect to establishment of the region of interest, in the case of the chest PA/AP image, for example, the region of interest is established on the entire lung field so that all important areas for diagnoses may be included. Concerning the establishment of the region of interest, an mean profile in the horizontal direction in an area covering 1/3 - 2/3 of the image is prepared as shown in Fig. 7, for example, and the minimum value P on the center of the image is determined first. Then, the maximum value is detected toward both ends of the image (A and B in Fig. 7). Next, left and right ends of the region of interest are determined by searching the point of prescribed rate between the maximum value and the minimum value toward the image end from each maximum value. By making this prescribed rate to be about 4/5 from experiences, a left and a right end can be determined properly. Further, an mean profile in the vertical direction within a range of the right and left ends thus obtained is prepared, then, processing identical to that in the horizontal direction is conducted, and X, Y and Q in the drawing are detected, and thereby, an upper end and a lower end can be determined. In addition to this, there are considered a method to establish the region of interest on the center of the image of region of interest, considering that an important portion for diagnoses is radiographed at the center of an image, and a method to establish the total irradiation field to be the region of interest when an important portion for diagnoses is broad like a head.

(4) Feature amount calculation:

Now, feature amount calculating means 130 calculates a feature amount in the radiation image. As this feature amount, for example, an absolute value of an edge component obtained by conducting, on the image, the filter processing for extracting a high frequency area such as a differential filter or a Laplacian filter can be regarded as contrast on an edge area of the image.

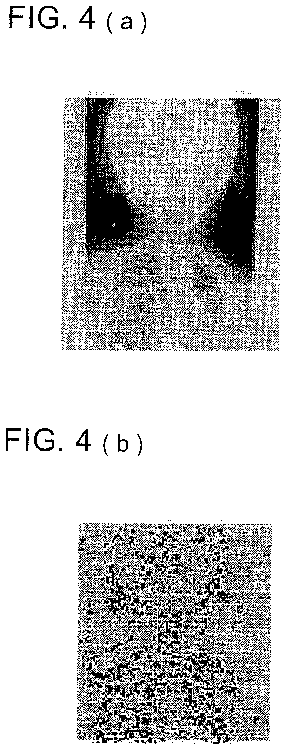

Fig. 4(a) is an original image of the cervical vertebrae, and Fig. 4(b) is the situation showing edges extracted from the image of the cervical vertebrae shown in Fig. 4(a).

In this case, by giving merit marks in accordance with a degree of contrast, namely, with a size of an absolute value of the edge component, and by preparing a histogram showing how the merit marks are distributed and showing pixel values where the merit marks are distributed, the degree of contrast (edge) can be used as a weight to each pixel. Concerning how to give the merit marks, in this case, when an absolute value, for example, is not higher than certain threshold value A determined experientially, a value of the absolute value is used as the merit mark, and when an absolute value is not lower than A, the merit mark is made to be 0. Thus, it is possible to give merit marks corresponding to the edge only to the edge presumed to be composed of the human body. In addition to the foregoing, the function shown in Fig. 8 may also be employed by using threshold value A for obtaining a smooth change.

Further, for example, it is also possible to use a multiple resolution method such as a Laplacian Pyramid method and a wavelet analysis, for extraction of the edge area. With respect to the extraction of the high frequency component by employing the aforesaid multiple resolution methods, detailed descriptions are disclosed in TOKKAIHEI Nos. 5-244508 and 6-274614.

A value obtained by summing up values of weighting calculated by the aforesaid contrast for all edge areas may be used for evaluating the feature amount. In addition to this, as a feature amount, there are considered, for example, image average density, a variance of pixel signal value within an image and an extent of the center (extent of how close to the center (image center)). Further, the following items are considered.

(a) Either one of the maximum value and the minimum value of the pixel signal value in the predefined region around each pixel.

(b) A median of the pixel signal value in the predefined region around each pixel

(c) A mode of the pixel signal value in the predefined region around each pixel

(d) Either one of the dispersion and the standard deviation of the pixel signal value in the predefined region around each pixel

(e) A pixel value difference in pixels arranged to be adjacent to each other or arranged at certain intervals

(5) Feature amount integration:

In the feature amount integrating means 130, integration is carried out so that the combination which is more important for diagnoses may be taken seriously. Owing to this, it is possible to conduct processing wherein the area that is necessary for diagnoses is taken seriously.

At this time, it is possible to adjust the influence of the feature amount by a certain constant value for multiplication by the obtained feature amount, addition to the obtained feature amount or subtraction to the obtained feature amount. Concretely, when $C(x, y) + A$ (where $A > 0$) is given as the feature amount $C(x, y)$, influence of the specific feature amount can be enlarged in case of determining the feature amount from the maximum of the group of the feature amount.

To be more specific, if $A(P, W\_1, W\_2)$ represents combination weight when $(x, y)$ represents a pixel, $P(x, y)$ represents a pixel value, $W\_1(x, y)$ represents contrast of an image edge portion and $W\_2(x, y)$ represents an extent of image center, for example, the feature amount C can be given with the following expression.

$$C = A(P, W\_1, W\_2) P(x, y) + A(P, W\_1, W\_2) W\_1(x, y)$$

$$+ A(P, W\_1, W\_2) W\_2(x, y)$$

In this case, the sum of C on total of all edge areas can be used for evaluating the feature amount. If there is made an arrangement so that A takes 2 only in an area where $P1 < P < P2$, $W1 < W\_1 < W2$ and $W3 > W\_2$ are satisfied, and it takes 1 in other areas, double remarks can be assigned only to the pixels on which edges are in existence on a range of P1 - P2 where signal values are estimated to be the area of the human body and on a range W1 - W2 of edges formed by the human body from which the edges of the irradiation field are removed, and the pixels are placed the center part of the image having larger extent of image center than certain value W3. These P1, P2 and W1 - W3 are values obtained experientially by the use of a discriminating analysis method. In addition to the method stated above, a method employing fuzzy integration can also be considered for the aforesaid combination.

(6) Feature amount evaluation:

Now, feature amount evaluating means 140 evaluates the feature amount calculated by feature amount calculating means 120 and integrated by feature amount integrating means 130 by means of a feature amount evaluating function.

There will be explained as follows an example of gradation processing that makes the efficiency of using a look-up table to be the maximum. This feature amount evaluating function E can be shown by the following expression as a basic expression.

$$E = \Sigma f(\Delta x' / \Delta x) W(x)$$

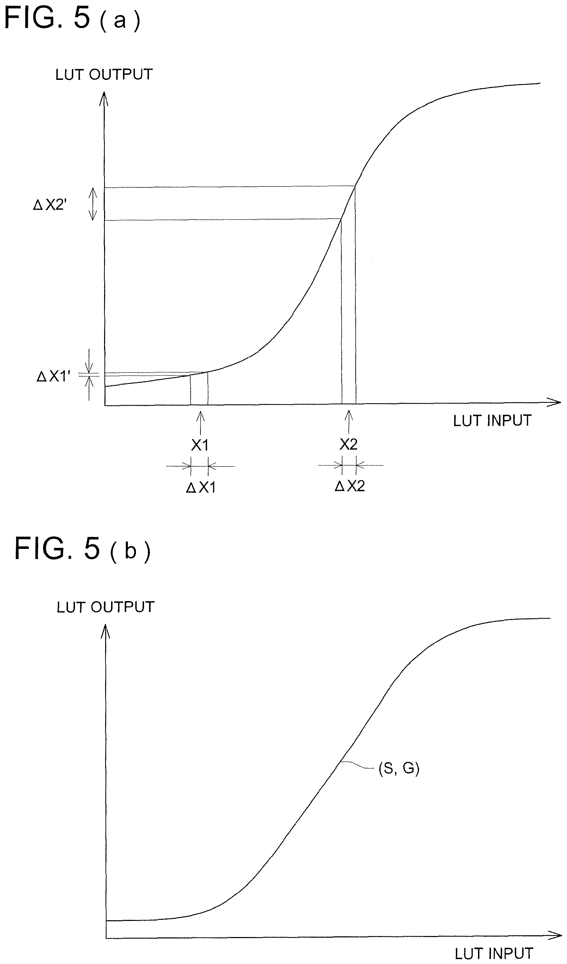

In this case, f represents the feature amount evaluating function for each pixel, $\Delta x$ represents microscopic changes of pixel value or feature amount value in x, and a length of the section $(x - \delta, x + \delta)$ is expressed specifically by one wherein addition or subtraction is applied on certain value $\delta$ with x serving as the center. $\Delta x'$ represents microscopic changes of x' representing a value of X after passing of LUT that represents a look-up table which determines gradation characteristics, and a length of section $(LUT(x - \delta), LUT(x + \delta))$ is expressed specifically, if LUT(x) represents a value after conversion of x by LUT. W(x) on the other hand is a weight of x. Fig. 5(a) shows an example of $\Delta x1$ and $\Delta x1'$ in x1 and of $\Delta x2$ and $\Delta x2'$ in x2. Such a feature amount evaluating function for each pixel f is put in operation on all points regarded as edges to calculate $\Sigma$.

Incidentally, the feature amount evaluating function for each pixel f can be as follows.

$$10 \text{ for } \Delta x' / \Delta x = 10$$

$$5 \text{ for } \Delta x' / \Delta x = 5$$

$$0 \text{ for } \Delta x' / \Delta x = 1$$

$$-5 \text{ for } \Delta x' / \Delta x = 1/5$$

$$-10 \text{ for } \Delta x' / \Delta x = 1/10$$

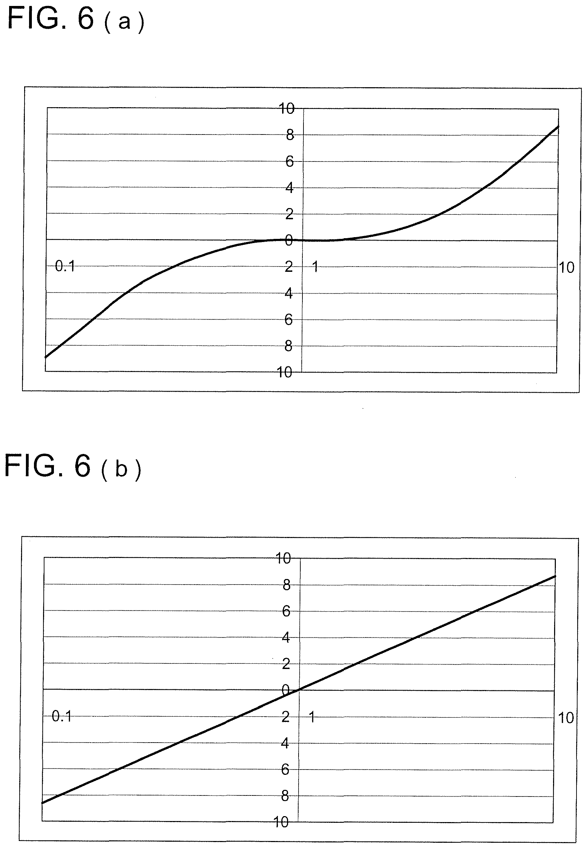

Such a feature amount evaluating function for each pixel f has characteristics shown, for example, in Fig. 6(a) or Fig. 6(b).

There is further considered, for example, a method wherein edge detection processing is conducted on the image after the feature amount conversion by a look-up table with certain SG values, with valuables such as shift value S and gradation value G of a look-up table (see Fig. 5(b)) that determines gradation characteristics, to obtain the ratio of edges. With respect to the SG values, when an image is converted by LUT(Ax - B) for LUT that is a base, gradation value G is defined to be A, and shift value S is defined to be B.

Namely, when E' represents the evaluating function, the following expression can be made to hold.

$$E'(S, G) = EDGE(S, G) / ORG\_E'(S, G)$$

In this case, EDGE(S, G) is average contrast of the image after look-up table conversion, and ORG_E'(S, G) is average contrast of the original image. This contrast is not one to be obtained directly from the image, but it may be one to evaluate how an amplitude of the agreed value has been changed after passing of the look-up table at the edge point exceeding a certain threshold value, under the input which is of a fixed value constantly. Namely, the foregoing is as follows.

Contrast is given by $E(S, G) = \Sigma \{(LUT(S, G, x + A1) - LUT(S, G, x - A1)) / (2 \times A) \times W(x)\}$ ... (AA). A1 in this case is a constant representing a microscopic section in pixel value x, and an extremely small value such as 5 is selected for the image with gradation of 12 bits, for example. W(x), on the other hand, is a weight indicating importance for each pixel, LUT(S, G, x) represents an output value in the case of converting point x in the image with a look-up table at given SG values, and $\Sigma$ represents the sum of detected edge points on all areas. Though the evaluation of contrast has been explained as an example in this case, it is also possible to make the ratio of dispersion between the image after conversion and the image before conversion to be the evaluating function, and to make the average density of the image after conversion to be the evaluating function, in the same way.

For example, in the case of the ratio of dispersion, $E''(S) = \Sigma \{VAR(S) / ORG\_V(S)\}$ holds. In this case, VAR(S) represents average variance after conversion, ORG_V(S) represents variance of the original image and $\Sigma$ represents the sum of points in the area having thereon images.

Further, for example, in the case of an average density, $E'''(S) = AVE(S, G) - A2$ holds. In this case, AVE(S, G) represents an average signal value after conversion, and A2 represents a constant.

(7) Determination of parameter:

In this case, parameter determining means 150 obtains S value and G value which make E(S, G) representing the results of the evaluation conducted by feature amount evaluating means 140 with the feature amount evaluating function to be the maximum or the minimum.

By doing the foregoing, if the feature amount is made to be contrast, for example, it is possible to make the contrast amplification factor in the totally important area of images after conversion to be the maximum, by making E(S, G) to be the maximum.

If the feature amount is made to be dispersion, for example, it is possible to determine S value, by making the evaluating function to be the minimum, so that fluctuations of images in a certain area may be the smallest.

When the feature amount is an average value, for example, it is possible to make an image average value in a certain area to be the same as specific constant A3, by making the evaluating function to be the minimum.

Further, by combining these functions, it is possible to prepare other evaluating functions in the evaluating means 140.

Further, it is also possible to make the contrast amplification factor in the totally important area of images after conversion and an average value to be in the desired condition, by combining a plurality of the evaluation results of the feature amount stated above without using each of them individually. To be concrete, when EC(S, G) represents an evaluating function of the contrast amplification factor and EA(S) represents an average value, it is possible to calculate higher marks when contrast is greater and density is more close to prescribed value A4, and thereby to determine LUT where an average pixel value is close to A4 and contrast amplification factor is high, by making E''''(S, G) = EA(S) $\times$ ES(S, G) to be the evaluating function.

Incidentally, in the aforementioned explanation, frequency enhancement processing and equalization processing in addition to the pixel value conversion by means of a look-up table for gradation processing are considered as the parameterized converting method. These processing are disclosed in detail by TOKKAI No. 2001-120524, TOKKAISHO No. 62-62373, TOKKAIHEI No. 9-44645 and Patent Document No. 266318. By employing a ratio of dispersion between before processing and after processing and a rate of change of edge sizes as the evaluating function, appropriate parameters for these processing can be determined. For example, frequency enhancement processing can be determined by enhancement coefficient $\beta$ and by absolute value of gradient K of signal correction function in equalization processing. However, if EF($\beta$) = {EDGE ($\beta$) / EDGE_ORG($\beta$)} / $\Sigma$ {VAR($\beta$) / ORG_V($\beta$)} - A5 is selected as the evaluating function of the frequency enhancement processing, an extent of enhancement can be determined so that a ratio of an edge amplification factor to the pixel variance may always be close to specific value A5, and enhancement of the edge and granularity of images can be controlled. In this case, EDGE_ORG($\beta$) represents average contrast of the original image, EDGE($\beta$) represents average contrast after frequency enhancement processing, VAR($\beta$) represents image average variance after frequency enhancement, ORG_V($\beta$) represents an average signal value of the original image, and A represents a constant determined experientially.

Further, in the case of equalization processing, when D_ORG(K) represents a dynamic range of an original image (maximum signal value - minimum signal value in the image), D(K) represents a dynamic range after equalization processing, and L(K, x) represents a value obtained by converting a value after equalization processing for pixel x with LUT, the expression EF(K) = $\Sigma$ {(L(K, x + A6) - L(K, x - A6)) / (2 $\times$ A6)} / $\alpha$ {D(K) / D_ORG (K)} is used to give. In this case, $\Sigma$ is to indicate the sum total on all detected edge areas, for example. By doing this, it is possible to determine the intensity of correction so that contrast amplification factor after equalization processing of the area that is important for diagnoses may be appropriate, by considering contrast of the total image. In the aforesaid expression, $\alpha$ is a correction coefficient for calculating an appropriate value, and it is obtained experientially.

(8) Image processing:

For image data coming from image data generating means 110, image processing means 160 conducts image processing, following the parameter determined as explained above by parameter determining means 150.

Specifically, in the gradation processing, for example, each pixel X of image data is converted by LUT(Gx - S) by using SG values determined by the aforesaid evaluating function (AA) and using LUT. By doing this, the processed images become a given evaluating function, namely, an image converted so that contrast increasing factor of important images after conversion may turns out to be the maximum, in the example stated above. Even in the case of frequency enhancement processing and equalization processing, processing is conducted in the same way by the enhancement coefficient or by the correction coefficient determined by the evaluating function like one mentioned above. These processed image data are supplied to an unillustrated image display means, various outer equipment and image output apparatuses.

Since the image processing is carried out by the parameter determined through evaluation based on the feature amount of each radiation image as stated above, it is possible to conduct appropriate image processing by weighting in accordance with an extent of importance based on the feature amount for each signal value, for example, then, by calculating an amplification factor of the signal in the case of converting by LUT for gradation processing of each pixel and by determining LUT that makes the sum total of the value obtained by multiplying the amplification factor and the weight together for all pixels to the maximum. Under the circumstances where the point that is important for diagnoses is positioned generally at the center of the image in many cases, for example, and it further has edge components, edge intensities in respective pixels detected by using an extent of image center represented by measuring a distance from the image center as a feature amount and using a differential filter are used, and the extent of importance based on the feature amount in this case is an amount determined based on these values of the intensities.

As a result, occurrence of a situation wherein diagnoses are difficult because of a failure in determination of image processing conditions can be prevented, and an appropriate parameter can be determined for each image data, thus, image processing can be conducted under appropriate conditions or under the conditions close to the appropriate conditions, at all times.

**Claims**

1. An image processing method of conducting gradation processing on a radiation image having signal values according to an irradiation amount of a radiation ray transmitting through a subject (5) by converting the signal values with a lookup table to obtain a suitable image for diagnosis using the radiation image, the image processing method comprising:

  a feature amount calculating step of calculating a feature amount of the radiation image data by a feature amount calculating means (120), the feature amount being an absolute value of an edge component;

  a feature amount integrating step of integrating the feature amount of radiation image data by a feature amount integrating means (130);

  a feature amount evaluating step of evaluating the feature amount calculated by the feature amount calculating means (120) and integrated by the feature amount integration means (130) by means of a feature amount evaluating function E(S, G);

  a parameter determining step (150) of determining parameters, namely an S value and a G value, wherein a parameter determining means (150) obtains the S value and the G value by making the results of the evaluation conducted by feature amount evaluating means (140) with the feature amount evaluating function E(S, G) to be the maximum such that the feature amount evaluating function E(S, G) is maximized,

  wherein E(S, G) represents the evaluating function to evaluate how an amplitude of a value has been changed after passing the look-up table at the edge points exceeding a certain threshold value, wherein the following expression is made to hold:

$$E(S, G) = EDGE(S, G) \,/\, ORG\_E(S, G),$$

  wherein EDGE(S, G) is average contrast of the image after look-up table conversion, and ORG_E(S, G) is average contrast of the original image,

  wherein the feature amount conversion is conducted by a look-up table LUT(Gx-S) with certain S, G values as variables shift value S and gradation value G of the look-up table that determines gradation characteristics to obtain the ratio of edges; and

  an image processing step of conducting gradation processing with the lookup table LUT(Gx-S) defined by the parameter S and G determined in the parameter determining step (150).

2. An image processing apparatus for conducting gradation processing on a radiation image having signal values according, to an irradiation amount of a radiation ray transmitting through a subject (5) by converting the signal values with a lookup table to obtain a suitable image for diagnosis using the radiation image, the image processing apparatus comprising:

  feature amount calculating means (120) of calculating a feature amount of the radiation image, the feature amount being an absolute value of an edge component;

  feature amount integrating means (130) of integrating the feature amount of radiation image;

  feature amount evaluating means (130) of evaluating the feature amount calculated by means of a feature amount evaluating function E(S, G);

  parameter determining means (150) of determining parameters, such as a shift value S and a gradation value G of the look-up table, for an image processing based on a result evaluated in the feature amount evaluating step, namely an S value and a G value, wherein a parameter determining means (150) obtains the S value and the G value by making the results of the evaluation conducted by feature amount evaluating means (140) with the feature amount evaluating function E(S, G) to be the maximum such that the feature amount evaluating function E(S, G) is maximized,

  wherein E(S, G) represents the evaluating function to evaluate how an amplitude of a value has been changed after passing the look-up table at the edge points exceeding a certain threshold value, wherein the following expression is made to hold:

$$E(S, G) = EDGE(S, G) \,/\, ORG\_E(S, G),$$

  wherein EDGE(S, G) is average contrast of the image after look-up table conversion, and ORG_E(S, G) is average contrast of the original image,
wherein the feature amount conversion is conducted by a look-up table LUT(Gx-S) with certain S, G values as variables shift value S and gradation value G of the look-up table that determines gradation characteristics to obtain the ratio of edges; and
image processing means of conducting gradation processing with the lookup table LUT(Gx-S) defined by the parameter S and G determined in the parameter determining means (150).

3. An image processing program to conduct gradation processing on a radiation image having signal values according to an irradiation amount of a radiation ray transmitting through a subject (5) by converting the signal values with a lookup table to obtain a suitable image for diagnosis using the radiation image, the image processing program is configured to carry out the process comprising:

a feature amount calculating step of calculating a feature amount of the radiation image data by a feature amount calculating means (120), the feature amount being an absolute value of an edge component;
a feature amount integrating step of integrating the feature amount of radiation image data by a feature amount integrating means (130);
a feature amount evaluating step of evaluating the feature amount calculated by the feature amount calculating means (120)and integrated by the feature amount integration means (130) by means of a feature amount evaluating function E(S, G);
a parameter determining step (150) of determining parameters, namely an S value and a G value, wherein a parameter determining means (150) obtains the S value and the G value of the look-up table for an image processing based on a result evaluated in the feature amount evaluating step, wherein a parameter determining means (150) obtains the S value and the G value by making the results of the evaluation conducted by feature amount evaluating means (140) with the feature amount evaluating function E(S, G) to be the maximum such that the feature amount evaluating function E(S, G) is maximized,
wherein E(S, G) represents the evaluating function to evaluate how an amplitude of a value has been changed after passing the look-up table at the edge points exceeding a certain threshold value, wherein the following expression is made to hold:

$$E(S, G) = EDGE(S, G) / ORG\_E(S, G),$$

wherein EDGE(S, G) is average contrast of the image after look-up table conversion, and ORG_E(S, G) is average contrast of the original image,
wherein the feature amount conversion is conducted by a look-up table LUT(Gx-S) with certain S, G values as variables shift value S and gradation value G of the look-up table that determines gradation characteristics to obtain the ratio of edges; and
an image processing step of conducting gradation processing with the lookup table LUT(Gx-S) defined by the parameter S and G determined in the parameter determining step (150).

**Patentansprüche**

1. Bildverarbeitungsverfahren zur Durchführung von Gradationsverarbeitung an einem Strahlungsbild mit Signalwerten gemäß einer Strahlungsmenge eines Strahlungsstrahls, der durch ein Objekt (5) transmittiert, durch Konvertieren des Signalwertes mit einer Umsetzungstabelle, um ein geeignetes Bild zur Diagnose unter Nutzung des Strahlungsbildes zu erhalten, wobei das Bildverarbeitungsverfahren umfasst:

einen Merkmalsmengenberechnungsschritt mit Berechnen einer Merkmalsmenge der Strahlungsbilddaten durch ein Merkmalsmengenberechnungsmittel (120), wobei die Merkmalsmenge ein absoluter Wert einer Kantenkomponente ist;
einen Merkmalsmengenintegrationsschritt mit Integrieren der Merkmalsmenge von Strahlungsbilddaten durch ein Merkmalsmengenintegrationsmittel (130);
einen Merkmalsmengenauswertungsschritt mit Auswerten der Merkmalsmenge, die durch das Merkmalsmengenberechnungsmittel (120) berechnet und durch das Merkmalsmengenintegrationsmittel (130) integriert wurde, durch eine Merkmalsmengenauswertungsfunktion E(S, G);
ein Parameterermittlungsschritt (150) mit Ermitteln von Parametern, nämlich einen S-Wert und einen G-Wert,

EP 1 521 209 B1

wobei ein Parameterermittlungsmittel (150) den S-Wert und den G-Wert ermittelt, indem die Ergebnisse der durch das Merkmalsmengenauswertungsmittel (140) durchgeführte Auswertung mit der Merkmalsmengenauswertungsfunktion E(S, G) das Maximum sein sollen, so dass die Merkmalsmengenauswertungsfunktion E(S, G) maximiert wird,
wobei E(S, G) die Auswertungsfunktion repräsentiert, um auszuwerten, wie sich eine Amplitude eines Wertes nach dem Passieren der Umsetzungstabelle an den Kantenpunkten, die einen bestimmten Schwellwert überschreiten, verändert hat, wobei der folgende Ausdruck eingehalten wird:

$$E(S, G) = EDGE(S, G) / ORG\_E(S, G),$$

wobei EDGE(S, G) ein durchschnittlicher Kontrast eines Bildes nach der Umsetzungstabellen-Konvertierung ist und ORG_E(S, G) ein durchschnittlicher Kontrast des Originalbildes ist,
wobei die Merkmalsmengen-Konvertierung durch eine Umsetzungstabelle LUT(Gx-S) durchgeführt wird mit bestimmten S-, G- Werten als variabler Verschiebungswert S und Gradationswert G der Umsetzungstabelle, die Gradationscharakteristiken festlegen, um das Kantenverhältnis zu erhalten; und
einen Bildverarbeitungsschritt mit Durchführen von Gradationsverarbeitung mit der Umsetzungstabelle LUT (Gx-S), die durch die Parameter S und G definiert ist, die in dem Parameterermittlungsschritt (150) ermittelt wurden.

2. Bildverarbeitungsvorrichtung zur Durchführung von Gradationsverarbeitung an einem Strahlungsbild mit Signalwerten gemäß einer Strahlungsmenge eines Strahlungsstrahls, der durch ein Objekt (5) transmittiert, durch Konvertieren des Signalwertes mit einer Umsetzungstabelle, um ein geeignetes Bild zur Diagnose unter Nutzung des Strahlungsbildes zu erhalten, wobei die Bildverarbeitungsvorrichtung umfasst:

ein Merkmalsmengenberechnungsmittel (120) zum Berechnen einer Merkmalsmenge des Strahlungsbildes, wobei die Merkmalsmenge ein absoluter Wert einer Kantenkomponente ist;
ein Merkmalsmengenintegrationsmittel (130) zum Integrieren der Merkmalsmenge eines Strahlungsbildes;
ein Merkmalsmengenauswertungsmittel (130) zum Auswerten der Merkmalsmenge, die durch das Merkmalsmengenberechnungsmittel (120) berechnet und durch eine Merkmalsmengenauswertungsfunktion E(S, G) berechnet wurde;
ein Parameterermittlungsmittel (150) zum Ermitteln von Parametern, wie einem Verschiebungswert S und einen Gradation-Wert G der Umsetzungstabelle, für eine Bildverarbeitung basierend auf einem Ergebnis, das in dem Merkmalsmengenauswertungsschritt ausgewertet wurde, nämlich ein S-Wert und ein G-Wert, wobei ein Parameterermittlungsmittel (150) den S-Wert und den G-Wert ermittelt, indem die Ergebnisse der Auswertung, die durch das Merkmalsmengenauswertungsmittel (140) mit der Merkmalsmengenauswertungsfunktion E(S, G) durchgeführt wurde, das Maximum sein sollen, so dass die Merkmalsmengenauswertungsfunktion E(S, G) maximiert wird,
wobei E(S, G) die Auswertungsfunktion repräsentiert, um auszuwerten, wie sich eine Amplitude eines Wertes nach dem Passieren der Umsetzungstabelle an den Kantenpunkten, die einen bestimmten Schwellwert überschreiten, verändert hat, wobei der folgende Ausdruck eingehalten wird:

$$E(S, G) = EDGE(S, G) / ORG\_E(S, G),$$

wobei EDGE(S, G) ein durchschnittlicher Kontrast eines Bildes nach der Umsetzungstabellen-Konvertierung ist und ORG_E(S, G) ein durchschnittlicher Kontrast des Originalbildes ist,
wobei die Merkmalsmengen-Konvertierung durch eine Umsetzungstabelle LUT(Gx-S) durchgeführt wird mit bestimmten S-, G- Werten als variabler Verschiebungswert S und Gradationswert G der Umsetzungstabelle, die Gradationscharakteristiken festlegen, um das Kantenverhältnis zu erhalten; und
einen Bildverarbeitungsschritt mit Durchführen von Gradationsverarbeitung mit der Umsetzungstabelle LUT (Gx-S), die durch die Parameter S und G definiert ist, die in dem Parameterermittlungsmittel (150) ermittelt wurden.

3. Bildverarbeitungsprogramm zur Durchführung von Gradationsverarbeitung an einem Strahlungsbild mit Signalwerten gemäß einer Strahlungsmenge eines Strahlungsstrahls, der durch ein Objekt (5) transmittiert, durch Konvertieren des Signalwertes mit einer Umsetzungstabelle, um ein geeignetes Bild zur Diagnose unter Nutzung des Strahlungs-

17

bildes zu erhalten, wobei das Bildverarbeitungsprogramm dazu konfiguriert ist, das Verfahren auszuführen, das umfasst:

einen Merkmalsmengenberechnungsschritt mit Berechnen einer Merkmalsmenge der Strahlungsbilddaten durch ein Merkmalsmengenberechnungsmittel (120), wobei die Merkmalsmenge ein absoluter Wert einer Kantenkomponente ist;

einen Merkmalsmengenintegrationsschritt mit Integrieren der Merkmalsmenge von Strahlungsbilddaten durch ein Merkmalsmengenintegrationsmittel (130);

einen Merkmalsmengenauswertungsschritt mit Auswerten der Merkmalsmenge, die durch das Merkmalsmengenberechnungsmittel (120) berechnet und durch das Merkmalsmengenintegrationsmittel (130) integriert wurde, durch eine Merkmalsmengenauswertungsfunktion E(S, G);

ein Parameterermittlungsschritt (150) mit Ermitteln von Parametern, nämlich einen S-Wert und einen G-Wert, wobei ein Parameterermittlungsmittel (150) den S-Wert und den G-Wert der Umsetzungstabelle für eine Bildverarbeitung auf Basis eines Ergebnisses ermittelt, das in dem Merkmalsmengenauswertungsschritt ausgewertet wurde, wobei ein Parameterermittlungsschritt (150) den S-Wert und den G-Wert ermittelt, indem die Ergebnisse der durch das Merkmalsmengenauswertungsmittel (140) durchgeführte Auswertung mit der Merkmalsmengenauswertungsfunktion E(S, G) das Maximum sein sollen, so dass die Merkmalsmengenauswertungsfunktion E(S, G) maximiert wird,

wobei E(S, G) die Auswertungsfunktion repräsentiert, um auszuwerten, wie sich eine Amplitude eines Wertes nach dem Passieren der Umsetzungstabelle an den Kantenpunkten, die einen bestimmten Schwellwert überschreiten, verändert hat, wobei der folgende Ausdruck eingehalten wird:

$$E(S, G) = EDGE(S, G) / ORG\_E(S, G),$$

wobei EDGE(S, G) ein durchschnittlicher Kontrast eines Bildes nach der Umsetzungstabellen-Konvertierung ist und ORG_E(S, G) ein durchschnittlicher Kontrast des Originalbildes ist,

wobei die Merkmalsmengen-Konvertierung durch eine Umsetzungstabelle LUT(Gx-S) durchgeführt wird mit bestimmten S-, G- Werten als variabler Verschiebungswert S und Gradationswert G der Umsetzungstabelle, die Gradationscharakteristiken festlegen, um das Kantenverhältnis zu erhalten; und

einen Bildverarbeitungsschritt mit Durchführen von Gradationsverarbeitung mit der Umsetzungstabelle LUT (Gx-S), die durch die Parameter S und G definiert ist, die in dem Parameterermittlungsschritt (150) ermittelt wurden.

**Revendications**

1. Procédé de traitement d'images pour effectuer un traitement de gradation d'une image obtenue par rayonnement ayant des valeurs de signal selon une quantité d'irradiation d'un rayon de rayonnement transmis à travers un sujet (5) en convertissant les valeurs de signal à l'aide d'un tableau de référence pour obtenir une image appropriée au diagnostic en utilisant l'image obtenue par rayonnement, le procédé de traitement d'images comprenant :

une étape de calcul d'une quantité de caractéristiques pour calculer une quantité de caractéristiques des données d'image obtenue par rayonnement à l'aide d'un moyen de calcul de quantité de caractéristiques (120), la quantité de caractéristiques étant une valeur absolue d'un composant de bord ;

une étape d'intégration de quantité de caractéristiques pour intégrer la quantité de caractéristiques de données d'image obtenue par rayonnement à l'aide d'un moyen d'intégration de quantité de caractéristiques (130) ;

une étape d'évaluation de quantité de caractéristiques pour évaluer la quantité de caractéristiques calculée par le moyen de calcul de quantité de caractéristiques (120) et intégrée par le moyen d'intégration de quantité de caractéristiques (130) par moyen d'une fonction d'évaluation de quantité de caractéristiques E(S, G) ;

une étape de détermination de paramètres (150) pour déterminer des paramètres, à savoir une valeur S et une valeur G, un moyen de détermination de paramètres (150) obtenant la valeur S et la valeur G en maximisant les résultats de l'évaluation effectuée par le moyen d'évaluation de quantité de caractéristiques (140) à l'aide de la fonction d'évaluation de quantité de caractéristiques E(S, G), de sorte que la fonction d'évaluation de quantité de caractéristiques E(S, G) est maximisée,

dans lequel E(S, G) représente la fonction d'évaluation pour évaluer, comment une amplitude d'une valeur a été changée après avoir passé le tableau de référence aux points de bord, qui excèdent une certaine valeur de seuil, l'expression suivante étant à observer :

$$E(S, G) = EDGE(S, G) / ORG\_E(S, G),$$

dans lequel EDGE(S, G) est le contraste moyen de l'image après la conversion par le tableau de référence et ORG_E(S, G) est le contraste moyen de l'image originale,
la conversion de quantité de caractéristiques étant effectuée par moyen d'un tableau de référence LUT(Gx-S) avec certaines valeurs S, G comme des variables de la valeur de décalage S et de la valeur de gradation G du tableau de référence, qui détermine des caractéristiques de gradation pour obtenir le rapport de bords ; et
une étape de traitement d'images pour effectuer un traitement de gradation par le tableau de référence LUT (Gx-S) défini par les paramètres S et G déterminés dans l'étape de détermination de paramètres (150).

2. Dispositif de traitement d'images pour effectuer un traitement de gradation d'une image obtenue par rayonnement ayant des valeurs de signal selon une quantité d'irradiation d'un rayon de rayonnement transmis à travers un sujet (5) en convertissant les valeurs de signal à l'aide d'un tableau de référence pour obtenir une image appropriée au diagnostic en utilisant l'image obtenue par rayonnement, le dispositif de traitement d'images comprenant :

des moyens de calcul d'une quantité de caractéristiques (120) pour calculer une quantité de caractéristiques d'image obtenue par rayonnement, la quantité de caractéristiques étant une valeur absolue d'un composant de bord ;
des moyens d'intégration de quantité de caractéristiques (130) pour intégrer la quantité de caractéristiques d'image obtenue par rayonnement ;
des moyens d'évaluation de quantité de caractéristiques (130) pour évaluer la quantité de caractéristiques calculée par moyen d'une fonction d'évaluation de quantité de caractéristiques E(S, G) ;
des moyens de détermination de paramètres (150) pour déterminer des paramètres, tels qu'une valeur de décalage S et une valeur de gradation G du tableau de référence pour un traitement d'images basé sur un résultat évalué dans l'étape d'évaluation de quantité de caractéristiques, à savoir une valeur S et une valeur G, un moyen de détermination de paramètres (150) obtenant la valeur S et la valeur G en maximisant les résultats de l'évaluation effectuée par le moyen d'évaluation de quantité de caractéristiques (140) à l'aide de la fonction d'évaluation de quantité de caractéristiques E(S, G), de sorte que la fonction d'évaluation de quantité de caractéristiques E(S, G) est maximisée,
dans lequel E(S, G) représente la fonction d'évaluation pour évaluer, comment une amplitude d'une valeur a été changée après avoir passé le tableau de référence aux points de bord, qui excèdent une certaine valeur de seuil, l'expression suivante étant à observer :

$$E(S, G) = EDGE(S, G) / ORG\_E(S, G),$$

dans lequel EDGE(S, G) est le contraste moyen de l'image après la conversion par le tableau de référence et ORG_E(S, G) est le contraste moyen de l'image originale,
la conversion de quantité de caractéristiques étant effectuée par moyen d'un tableau de référence LUT(Gx-S) avec certaines valeurs S, G comme des variables de la valeur de décalage S et de la valeur de gradation G du tableau de référence, qui détermine des caractéristiques de gradation pour obtenir le rapport de bords ; et
un moyen de traitement d'images pour effectuer un traitement de gradation par le tableau de référence LUT (Gx-S) défini par les paramètres S et G déterminés dans le moyen de détermination de paramètres (150).

3. Programme de traitement d'images pour effectuer un traitement de gradation d'une image obtenue par rayonnement ayant des valeurs de signal selon une quantité d'irradiation d'un rayon de rayonnement transmis à travers un sujet (5) en convertissant les valeurs de signal à l'aide d'un tableau de référence pour obtenir une image appropriée au diagnostic en utilisant l'image obtenue par rayonnement, le programme de traitement d'images étant configuré pour réaliser le procédé comprenant :

une étape de calcul d'une quantité de caractéristiques pour calculer une quantité de caractéristiques des données d'image obtenue par rayonnement à l'aide d'un moyen de calcul de quantité de caractéristiques (120), la quantité de caractéristiques étant une valeur absolue d'un composant de bord ;
une étape d'intégration de quantité de caractéristiques pour intégrer la quantité de caractéristiques de données d'image obtenue par rayonnement à l'aide d'un moyen d'intégration de quantité de caractéristiques (130) ;
une étape d'évaluation de quantité de caractéristiques pour évaluer la quantité de caractéristiques calculée par le moyen de calcul de quantité de caractéristiques (120) et intégrée par le moyen d'intégration de quantité de caractéristiques (130) par moyen d'une fonction d'évaluation de quantité de caractéristiques E(S, G) ;
une étape de détermination de paramètres (150) pour déterminer des paramètres, à savoir une valeur S et une valeur G, un moyen de détermination de paramètres (150) obtenant la valeur S et la valeur G du tableau de référence pour un traitement d'images basé sur un résultat évalué dans l'étape d'évaluation de quantité de caractéristiques, un moyen de détermination de paramètres (150) obtenant la valeur S et la valeur G en maximisant les résultats de l'évaluation effectuée par le moyen d'évaluation de quantité de caractéristiques (140) à l'aide de la fonction d'évaluation de quantité de caractéristiques E(S, G), de sorte que la fonction d'évaluation de quantité de caractéristiques E(S, G) est maximisée,
dans lequel E(S, G) représente la fonction d'évaluation pour évaluer, comment une amplitude d'une valeur a été changée après avoir passé le tableau de référence aux points de bord, qui excèdent une certaine valeur de seuil, l'expression suivante étant à observer :

$$E(S, G) = EDGE(S, G) / ORG\_E(S, G),$$

dans lequel EDGE(S, G) est le contraste moyen de l'image après la conversion par le tableau de référence et ORG_E(S, G) est le contraste moyen de l'image originale,
la conversion de quantité de caractéristiques étant effectuée par moyen d'un tableau de référence LUT(Gx-S) avec certaines valeurs S, G comme des variables de la valeur de décalage S et de la valeur de gradation G du tableau de référence, qui détermine des caractéristiques de gradation pour obtenir le rapport de bords ; et
une étape de traitement d'images pour effectuer un traitement de gradation par le tableau de référence LUT (Gx-S) défini par les paramètres S et G déterminés dans l'étape de détermination de paramètres (150).

# FIG. 1

PROCESSED IMAGE DATA

100 IMAGE PROCESSING APPARATUS

160 IMAGE PROCESSING MEANS

150 PARAMETER DETERMINING MEANS

140 FEATURE AMOUNT EVALUATING MEANS

130 FEATURE AMOUNT INTEGRATING MEANS

120 FEATURE AMOUNT CALCULATING MEANS

PARAMETER

IMAGE DATA

110 IMAGE DATA GENERATING MEANS

101 CONTROL MEANS

40 RADIATION IMAGE READER

5 SUBJECT

30 RADIATION GENERATOR

# FIG. 2

```
                    ┌─────────────┐
                    │    START    │
                    └─────────────┘
                           │
        ┌──────────────────────────────────┐
        │  IMAGE DATA GENERATION BY         │  S1
        │  RADIOGRAPHING AND READING        │
        └──────────────────────────────────┘
                           │
        ┌──────────────────────────────────┐
        │  CALCULATION OF FEATURE AMOUNT    │  S2
        │  OF REGION FROM IMAGE DATA        │
        └──────────────────────────────────┘
                           │
        ┌──────────────────────────────────┐
        │  INTEGRATION OF PLURAL            │  S3
        │  FEATURE AMOUNTS                  │
        └──────────────────────────────────┘
                           │
        ┌──────────────────────────────────┐
        │  EVALUATION OF FEATURE AMOUNT     │
        │  BY FUNCTION FOR EVALUATING       │  S4
        │  FEATURE AMOUNT                   │
        └──────────────────────────────────┘
                           │
        ┌──────────────────────────────────┐
        │  DETERMINING PARAMETER OF         │
        │  IMAGE PROCESSING FROM            │  S5
        │  RESULT OF EVALUATION             │
        └──────────────────────────────────┘
                           │
        ┌──────────────────────────────────┐
        │  IMAGE PROCESSING ACCORDING       │  S6
        │  TO PARAMETER                     │
        └──────────────────────────────────┘
                           │
                    ┌─────────────┐
                    │     END     │
                    └─────────────┘
```

# FIG. 3 ( a )

IRRADIATION FIELD RECOGNITION PROCESSING

IMAGING SURFACE

IRRADIATION FIELD
EDGE PORTION

INSIDE OF
IRRADIATION FIELD

OUTSIDE OF
IRRADIATION FIELD

EP4    EP3    EP2

EP1

P

EPk

# FIG. 3 ( b )

Sd

P            POSITION         END PORTION

FIG. 4 ( a )

FIG. 4 ( b )

FIG. 5 ( a )

FIG. 5 ( b )

FIG. 6 ( a )

FIG. 6 ( b )

## FIG. 7

MEAN PROFILE IN
VERTICAL DIRECTION

X

Q

Y

1 / 3

2 / 3

A

P

B

MEAN PROFILE IN
HORIZONTAL DIRECTION

## FIG. 8

MERIT MARKS

- A

A

EDGE SIZE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55012429 A
- JP 63189853 A
- JP 9090048 A
- JP 6342098 A
- JP 6061325 A
- JP 2000157518 A
- WO 0205206 A2
- JP 2001053974 A
- JP 11142998 A
- JP 2002156716 A
- JP 63259538 A
- JP 5007579 A
- JP 7181609 A
- JP 5244508 A
- JP 6274614 A
- JP 2001120524 A
- JP 62062373 A
- JP 9044645 A
- JP 266318 A